# NEW EUROPEAN PATENT SPECIFICATION

(11) **EP 1 057 519 B2**
(45) Date of publication and mention of the opposition decision: **24.08.2011**
(45) Mention of the grant of the patent: 01.08.2007
(21) Application number: 00660072.0
(22) Date of filing: 18.04.2000
(51) Int. Cl.: B01D 53/94, F01N 3/20

(54) **Purification system for diesel engine exhaust gases**
Abgasreiningungssystem für einen Dieselmotor
Système de purification de gaz d'échappement d'un moteur diesel

(30) Priority: 18.05.1999 FI 991133
(43) Date of publication of application: 06.12.2000
(73) Proprietor: ECOCAT OY, 41331 Vihtavuori (FI)
(72) Inventor: Maunula, Teuvo, 90100 Oulu (FI); Vakkilainen, Aulis, 41330 Vihtavuori (FI); Lylykangas, Reijo, 41330 Vihtavuori (FI); Torkkell, Keijo, 40630 Jyväskylä (FI)
(74) Representative: Teipel, Stephan

(56) References cited:
- EP-A- 0 645 527
- EP-A- 0 835 684
- WO-A-97/29835
- US-A- 3 785 781
- US-A- 3 810 361
- US-A- 5 855 854

## Description

The present invention relates to a purification system for diesel engine exhaust gases and a method for the purification of diesel engine exhaust gases.

The diesel engine is clearly more fuel efficient than the gasoline engine, in particular in heavy-duty vehicles, and the technology of diesel engines (turbo direct injection, TDI) has in recent years developed to such a level that their performance is competitive as compared with conventional gasoline-powered passenger cars. Emission limits are rapidly being tightened in steps in Europe, the United States and Japan. Emissions are measured with different driving cycles in passenger cars and in trucks. In Europe, transient passenger-car test cycles simulating actual driving (MVEG-B) emphasize city driving, and the cycles for heavy-duty vehicles are being changed from the former 13-step steady-state cycle to a transient cycle (European Transient Cycle). In present-day passenger-car and truck targets, a decrease is required, in particular in the emissions of NOₓ and of particles. The emission limits for particles and NOₓ will be halved with the transfer from the Euro 3 (year 2000) to the Euro 4 (year 2005): particles from 0.05 g/km to 0.025 g/km, and NOₓ from 0.50 g/km to 0.25 g/km. The technical problem in terms of operation is the low temperature of diesel exhaust gases and their low concentration of hydrocarbons (HC) in proportion to their NOₓ concentration. In exhaust gases containing an excess of oxygen, only hydrocarbons have some degree of selectivity for the reduction of nitrogen oxides. Carbon monoxide and hydrogen rather react with oxygen. With a conventional 4-way catalyst, a NOₓ conversion of approximately 5-10 % and a particle conversion of approximately 20-35 % are attained, an operating level which in many cases is not sufficient for the Euro 4 requirements. The other unburned emissions in exhaust gas (carbon monoxide and hydrogen) are hardly capable of reducing NOₓ in lean exhaust gases. Gaseous emissions (HC, CO) are normally purified with a conversion of over 70 % in a good 4-way or oxidation catalyst (Pt and/or Pd catalyst). Since the temperature of the catalyst is a critical factor in diesel vehicles, the catalyst is often installed as close to the engine as possible (CC=Close Coupled) instead of conventional installation under the body (UF=Under Floor). The temperature difference in the different positions may be more than 30-50 °C.

The particles in diesel engine exhaust gases are composed of solid carbon (C) and of hydrocarbons, sulphates, water and inorganic compounds (ashes, metal salts) derived from the fuel or the lubricant. The hydrocarbons are oxidised to water and carbon dioxide with a conversion of up to 80-90% with a normal active catalyst.

The reduction of nitrogen oxides has been promoted by the injection of fuel or reduction agent into the exhaust pipe system or the cylinder. After-injection of diesel fuel into the cylinders is controlled by the vehicle's own control system, but injection into the exhaust pipe system, at a point upstream of the catalyst, requires a separate control system of its own. Injection into the cylinders has the advantage that in that case the temperature is under low engine loads (catalyst temperature below 300 °C) sufficiently high for the cracking of the fuel hydrocarbons to a form more advantageous for reduction. Fuel after-injected into the cylinder under high loads may, however, largely burn entirely. After-injected fuel decreases NOₓ emissions also thermally, since the combustion chamber contains locally and momentarily richer gas mixtures. By means of fuel injection, conversions of approximately 20-30 % have been attained within a temperature range of 200-300 °C. In passenger cars the temperature of the exhaust gas immediately downstream of the engine is usually 150-250 °C in city driving and 250-350 °C in highway driving. For this reason, catalysts containing Pt as the active component are usually employed in these targets. Different hydrocarbons and different catalyst compositions have operating windows at different temperatures. For this reason, there are often used multi-block catalysts by means of which the operating window can be expanded. By the use of an Ag catalyst upstream and a Pt catalyst downstream, the operating window can be expanded significantly, to a range of 200-600 °C (EP 0682 975 A1). However, high-temperature catalysts require the use of a very high amount of reducing agent, which is in practice not possible in diesel cars during driving.

There have also been disclosed systems of two catalysts, wherein the first NOₓ catalyst is located close to the engine and its operating window is within the range of 200-300 °C (WO 98/39083). The second catalyst is further away from the engine, and a bypass is arranged for it over the 1^{st} catalyst by leaving a portion of the channels of the 1^{st} catalyst without a coating. A corresponding option is a system in which the exhaust gases from three cylinders are directed to a first catalyst and the exhaust gases from one cylinder are directed to a second catalyst (DE 197 22 147 A1). Flow dynamics have also been used for arranging a bypass in a controlled way *via* different parts of a honeycomb (FI 963667). In options of this type, the combustion of soot cannot be promoted very much, the quantity of reducing agents is low, especially under higher loads, and in spite of the bypass it remains even lower in the second catalyst. The operating window of the catalysts has also been optimised by using liquid cooling in the catalyst, whereby the catalyst temperature can be maintained at the desired level (WO 96/16256).

For the filtration of particles there have been developed various filters, but they cannot be used for long periods without regeneration, i.e. without the removal of the accumulated particles. Furthermore, unburned ashes block the filters and thus they are not maintenance-free. It is difficult to oxidise solid soot particles, since their thermal combustion requires an air temperature of over 600 °C. The amount of inorganic compounds is relatively low, and it is desirable that they pass unchanged through the catalyst system. The sulphates in the exhaust gas are derived from the sulphur of the fuel and the lubricant; the sulphur oxidises to SO₂ and to SO₃, which forms sulphate in the catalyst and the particles. The formation of sulphates can be lowered by lowering the sulphur content in the fuel or by selecting the composition of the catalyst to be such that the SO₂ present in the exhaust gas oxidises as little as possible. A high Pt content in the catalyst and a temperature within the range of 350-450 °C increase the formation of sulphates. Even if the fuel used contains only 50 ppm sulphur, the formation of sulphates is a problem momentarily and in the long range. There have also been presented complicated particle filter methods regenerating from ashes and inorganic material, but in them it is necessary to resort to a double channel system and a very complicated control system (EP 0703 352 A3).

For the filtration and combustion of soot in diesel exhaust gases there have been developed various filters and alternatives for their regeneration: flame burners, electric heating and catalyst-containing additives in the fuel. The filters involve the problems of their high price, low mechanical strength and regeneration. Burners involve the problems of their high price, control and deteriorating effect on the filter. Electric regeneration is often ineffective if the soot particles are not directly on the surface of the resistors. Both when burners and when electric heating are used it is necessary to use an excess of heat in order to cause all of the soot to burn, which increases the consumption of fuel. Their mechanical implementation is often also problematic. The catalyst materials added to the fuel are dispersed on the soot surface, but most of the metal emissions (V, Ce, Fe) to be considered detrimental come out of the exhaust pipe or remain permanently in the filter. Filters also involve the problem of the removal of incombustible compounds (inorganic compounds, ashes).

For the combustion of soot in a filter there has also been presented an option made up of a Pt-containing oxidation catalyst and a subsequent filter (US 4 902 487), in which soot in the filter is burned with the help of the NO₂ formed in the oxidation catalyst. It was also possible to add to the filter surface a catalytic metal promoting the combustion of soot. The oxidation temperature of the soot was clearly decreased as compared with combustion with oxygen. However, there continued to be the problem of the regeneration of the filter with respect to substances other than soot. The combustion of soot is also a problem in cases in which the temperature of the exhaust gas in normal driving situations is very low (<250 °C). Inorganic soot and sulphates accumulate permanently in the filters, and thus a passive method such as this does not work.

In another option (EP 0835684 A2) of a corresponding type there is used a combination of two successive honeycombs wherein the first, a Pt-containing, low cell density honeycomb, forms NO₂ and the second one collects and burns soot. The second catalyst could also be an oxidation/deNOₓ catalyst. In this case very small quantities of reducing agents arrive at the second catalyst, since the active catalyst upstream has oxidised them almost completely and the NOₓ conversion remains low. Since NO₂ is formed only in the upstream honeycomb, there may at the downstream catalyst arise situations in which NO₂ formed in the first honeycomb does not arrive there for the reason that it is adsorbed there. At lower temperatures (<300 °C), large amounts of NO₂ are adsorbed in the form of nitrates to the surfaces of the metal oxide based catalysts. A 2-honeycomb solution of this type does not fit close to the engine but, owing to the space requirement, has to be installed at a longer distance, where the temperatures in many car models are too low for the formation of NO₂, the reduction of NOₓ and the combustion of soot. A honeycomb with a high cell density may in use also become blocked in a situation in which unburned matter has accumulated in it or the temperature is too low for the formation of NO₂. NOₓ activity sufficient for the Euro 3 or Euro 4 emission limit is also not attained with the option disclosed. An option of a corresponding type is a two-catalyst system in which the cell density of the first catalyst is, in order to prevent the blocking of the catalyst cells, lower than that of the second catalyst (EP 0 875 667 A2).

Document US5855854 discloses an oxidizing catalytic converter, which is provided in an exhaust passage of a diesel engine. A catalyst is formed by coating a wash coat comprising platinum onto a substrate The converter is divided into a high temperature part through which high temperature exhaust is circulated and a low temperature part through which low temperature exhaust is circulated, and the platinum particle diameter of the catalyst in the low temperature part is arranged to be less than that in the high temperature part. It is preferable that the wash coat amount of the low temperature part is less than that of the high temperature part. It is moreover preferable that the platinum amount in the low temperature part is greater than that in the high temperature part. In this way, the soluble organic fraction, hydrocarbons and carbon monoxide are effectively and continuously purged from the exhaust. This document describes a system comprising two catalysts serially connected comprising Pt as active material and which may comprise Ce as NOₓ adsorbent.

Document EP0835684 describes an emission control system especially for light duty diesel engines which has a first catalyst positioned upstream of a second catalyst. The first catalyst converts NO to NO₂ and the second catalyst oxidises HC, NO and VOF. The tendency of the second catalyst to collect soot particles is reduced by combustion of the soot particles by NO₂ from the first catalyst. The document discloses serially connected catalysts comprising PT and NOₓ adsorbent.

The object of the present invention is to provide a maintenance-free system which is continuous-working in terms of the removal of particles and NOₓ and by means of which high degrees of conversion are attained in particular with respect to nitrogen oxides and particles.

The invention is based on combining a system of two catalysts in a way in which the conditions are as long as possible favourable for the combustion of the soot present in the particles and for the reduction of nitrogen oxides, without soot accumulating permanently in the channels, and the regeneration of deposited soot or an increase in pressure loss in the catalysts does not constitute a problem.

The principal characteristics of the invention are given in the accompanying claims.

According to the invention there is thus provided a purification system for diesel engine exhaust gases, which system is maintenance-free and comprises a honeycomb-structured first catalyst and a honeycomb-structured second catalyst disposed downstream of the first catalyst in the flow direction of the exhaust gases, both of the honeycombs having a catalyst material active for the selective reduction of nitrogen oxides, for the formation of NO₂ and for the oxidation of hydrocarbons, carbon monoxide and hydrogen, at least one of the honeycombs contains a compound which binds soot and the cell number of the first honeycomb catalyst is higher than that of the second honeycomb catalyst, by means of which the combustion of soot and the reduction of nitrogen oxides are further improved.

The said honeycomb catalysts have numerous parallel flow-through channels. The honeycombs may be metallic or ceramic.

In the system according to the invention at least one of the honeycombs contains a compound, which binds soot. Compounds suitable for this purpose include Mn, Ce, Fe, V, La, Zr, Cr, alkali metals (Na, K), Cu, Ba, Sr and, of noble metals, Rh. These compounds, which form more easily a contact surface with soot, promote the oxidation of soot.

In the system according to the invention the cell number of the first honeycomb catalyst is higher than the cell number of the second honeycomb catalyst.

In this embodiment, the cell number of the first honeycomb catalyst is preferably 62(400) or higher than 62(400) cells per square cm (c/cm²) (cells per square inch (cpsi)), and the cell number of the second honeycomb catalyst is preferably 62(400) or lower than 62(400) c/cm² (cpsi). The cell number of the first honeycomb catalyst may in this case be, for example, 62-310(400-2000) c/cm² (cpsi) and that of the second honeycomb catalyst, for example, 46,5-62(300-400) c/cm² (cpsi). The purpose of the variation of the cell number is to increase the retention time of soot in the exhaust pipes in conditions in which it can burn thermally or catalytically. By using in the first catalyst a honeycomb in which the cell number is higher than 62(400) c/cm² (cpsi) it is possible to increase the retention time of soot in the total system, since soot adheres more easily to high cell density honeycombs.

Often the adding of the compounds stated above to the same layer as an ordinary 4-way catalyst weakens the activity. For this reason it is preferable that the effective 4-way catalyst layer attached to the surface of the support structure is maintained as a separate layer, and the layer promoting the combustion of soot is added as a separate coating layer on top of the 4-way catalyst. Alternatively, it is also possible to add certain soot-binding compounds, such as Ce, to the same layer as the active catalyst material.

The said compound which binds soot is preferably present together with alumina, titania, silica, zeolite, or a combination thereof.

The honeycombs in a system according to the invention preferably comprise a washcoat having a large surface area on which the said active catalyst material is supported. Suitable washcoats include washcoats containing alumina, titania, silica and/or zeolite.

The active catalyst material in the honeycombs of a system according to the invention is preferably a noble metal, such as platinum, palladium, rhodium, or a mixture thereof. An especially preferable active catalyst material for the reduction of nitrogen oxides is platinum, for which the suitable charging range is approximately 1.4-7 g/cm³ catalyst. With lower Pt loadings than this, NOₓ activity is low. Even higher Pt loadings can be used, but they do not provide a very great benefit as compared with the cost increase.

The honeycomb catalysts of a system according to the invention can be fitted in the same converter or in different converters. A system of two converters may also have two or more catalyst blocks in one or both of the converters. In this way, the operating window can be optimised for different driving conditions. In a one-converter situation, the location of the honeycomb catalysts is preferably close to the engine (CC) or under the body (UF), and in a two-converter situation, the location of the first honeycomb catalyst is preferably CC and that of the second honeycomb catalyst UF.

When the purpose of the honeycombs is to collect particles, the honeycombs may also be uncoated with a washcoat, in which case a higher cell number can be used and the soot adheres directly to the surface of the honeycomb material. A metal honeycomb not coated with a washcoat has stronger electrostatic properties than a ceramic honeycomb, and a smooth metal surface is a good contact surface for the combustion of soot. The surface of a metal or ceramics may have additives which speed up combustion, the metal may be, for example, entirely or in part coated with some other metal or an oxide.

The adhering of particles to the honeycombs can be promoted by optimising the shape of the flow channels. The shape of the cells in the honeycombs may be round or square or contain narrow corners, in which case soot is caused to adhere to the corners. Materials which bind soot and/or promote combustion are preferably focussed at the "armpits" of the channels. The catalyst structure may also have flow channels in different orientations (cf. static mixers) or there may be flow baffles on the surface of the structure, whereby the adhering of particles is promoted.

The soot, C(s), accumulated in the system can be regenerated by a thermal or catalytic reaction (g = in gas phase, -cat = on catalyst surface, s = in solid state):

| | |
|---|---|
| C(s) + NO₂(g) → COₓ(g) + NO(g)(+N₂(g)) | >230 °C |
| C(s) + NO₂₋cat → COₓ(g) + NO(g)(+N₂(g)) | >200 °C |
| C(s) + O₂(g) → COₓ (g) | >500 °C |
| C(s) + O-cat → COₓ(g) | >300 °C |

Soot is also oxidised in a gas stream while moving in a flow channel, but physical or chemical adsorption, absorption or adherence to the channels and the catalyst surface increase the retention time significantly. Other gaseous oxygen-binding compounds (oxygenates) or chemical compounds (S compounds, C-H-O-N-S compounds) adsorbed to the catalyst surface also promote slow combustion of soot. The soot formed in diesel engines contains mainly carbon, but also some hydrogen. The size of the particles forming in the combustion is usually approximately 100-500 nm, in which case the contact surface with the active sites of the catalyst is usually poor. Thermal combustion of a soot particle under oxidation by oxygen or NO₂ is a slow heterogeneous reaction, which does not have time to occur in a straight exhaust pipe or a normal oxidation catalyst. For this reason, according to the invention the retention time of soot in conditions in which soot can burn (>200 °C) has been increased. It would be preferable to form NO₂ as early as possible immediately downstream of the engine, in which case as much time as possible is left for the combustion of soot, and the temperature close to the engine is sufficient. According to the invention, NO₂ is usually formed in both of the honeycomb catalysts, in which case a honeycomb has as high an NO₂ concentration as possible in the gas phase and on the surfaces. Thus NO₂ is formed continuously also *in situ* in the same honeycomb catalysts in which soot is oxidised. In conventional diesel passenger cars, soot is in that case regenerated at relatively low driving speeds (>40-60 km/h), and thus the system according to the invention works even in city driving. In some cases too cold an exhaust gas may be a problem. Components, such as sulphates or nitrates, adsorbed to the surface of the catalyst or the honeycomb also bind soot more tightly to the honeycomb surface, and thereby the retention time of soot in the honeycomb is increased. With Pt catalysts, there form relatively large amounts of sulphates, which are also useful, since sulphates bind water and soot to their surface. This works in particular at temperatures (<200-230 °C) at which soot is not yet oxidised, and thus particles can be bound to the honeycomb during cold phases. However, particles are accumulated selectively in a thin layer in contact with the catalyst surface, and thus this binding does not cause blocking of the catalyst. According to composition analyses, the particles contain large amounts of sulphate compounds and water.

As stated above, the oxidation of soot can be promoted with compounds, which most easily form a contact surface with soot. The binding and combustion of soot can be best promoted with Ce, La, Mn, V, Cr, Cu, Fe, alkali metals (Na, K) and, of the noble metals, Rh. These additives can be added to the washcoat layer both dispersed in a very finely-divided form and as larger separate particles. Since the effect of these compounds in promoting the combustion of soot is relatively weak, the compounds added to the catalyst are selected according to how they bind soot more tightly to their surface and at the same time somewhat promote the combustion of soot. By means of additives, the combustion temperature of soot was lowered to below 400 °C in oxygen. NO₂ and the combined effect of these catalytic materials also promote the combustion of soot. Therefore, the additives are preferably of such a type that they bind compounds of sulphur and nitrogen, which in turn bind water and soot particles. Compounds, which bind stable sulphates and/or nitrates stabilize the state of the surface with respect to the binding of water and soot. Alumina and ceria bind sulphates up to 400-600 °C. For example, the sulphates of Mn, Sr and Ba are stable in normal diesel exhaust gas conditions. The soot-binding action of the additives was more important than their actual catalytic action on the combustion of soot, since the total velocity of catalytic combustion of soot is lower than the combustion of soot under the effect of NO₂. The accumulation of sulphur in these additives probably changes the soot oxidation properties of these additives.

Diesel exhaust gases contain very small amounts of reducing agents, for which reason the attainment of higher NOₓ conversions is difficult. Conversions with a CC or CC+UF catalyst are usually approximately 5-10 % in the Euro 3 level vehicle test (M'VEG-B).

Exhaust gas recycling (EGR) is used for decreasing NOₓ emissions of diesel cars by lowering the combustion chamber temperature, whereupon smaller amounts of nitrogen oxides are formed. EGR can be optimised for one of the options presented herein. The EGR and waste gate streams can be fitted together in a manner whereby the entire flow rate and the HC/NOₓ ratio in the catalyst blocks promote the production of low emissions of particles and NOₓ.

According to the invention there are also provided methods for the purification of diesel engine exhaust gases.

According to a first method, the exhaust gases are directed through a first honeycomb catalyst and thereafter through a second honeycomb catalyst, in both of which honeycombs the nitrogen oxides present in the exhaust gases are reduced selectively, NO₂ is formed, and hydrocarbons, carbon monoxide and hydrogen are oxidised, and a portion of the exhaust gases is directed past the first catalyst to the second catalyst. In this method, preferably 10-50 %, especially preferably 20-30 % of the total exhaust gas volume is directed past the first catalyst.

According to a second method, the exhaust gases are directed through a first honeycomb catalyst and thereafter through a second honeycomb catalyst, in both of which honeycombs the nitrogen oxides present in the exhaust gases are reduced selectively, NO₂ is formed, and hydrocarbons, carbon monoxide and hydrogen are oxidised, the cell numbers of the honeycombs being selected so that the cell number of the first honeycomb catalyst is higher than the cell number of the second honeycomb catalyst, whereby a high conversion is attained in the combustion of soot and the reduction of nitrogen oxides.

According to a third method, the exhaust gases are directed through a first honeycomb catalyst and thereafter through a second honeycomb catalyst, in both of which honeycombs the nitrogen oxides present in the exhaust gases are reduced selectively, NO₂ is formed, and hydrocarbons, carbon monoxide and hydrogen are oxidised, at least one of the catalysts containing a compound which binds soot and promotes the combustion of soot.

The system and methods according to the invention can also be used for the purification of the exhaust gases of various combustion plants or gasoline exhaust gases (lean mixture) in situations in which particles and nitrogen oxides are formed simultaneously.

The invention is described below in greater detail, with reference to the accompanying drawing, wherein
- Figure 1: depicts a diagram of one catalyst system according to the invention,
- Figure 2: depicts a diagram of another catalyst system according to the invention, and
- Figure 3: depicts graphically the emission results obtained with different catalyst systems.

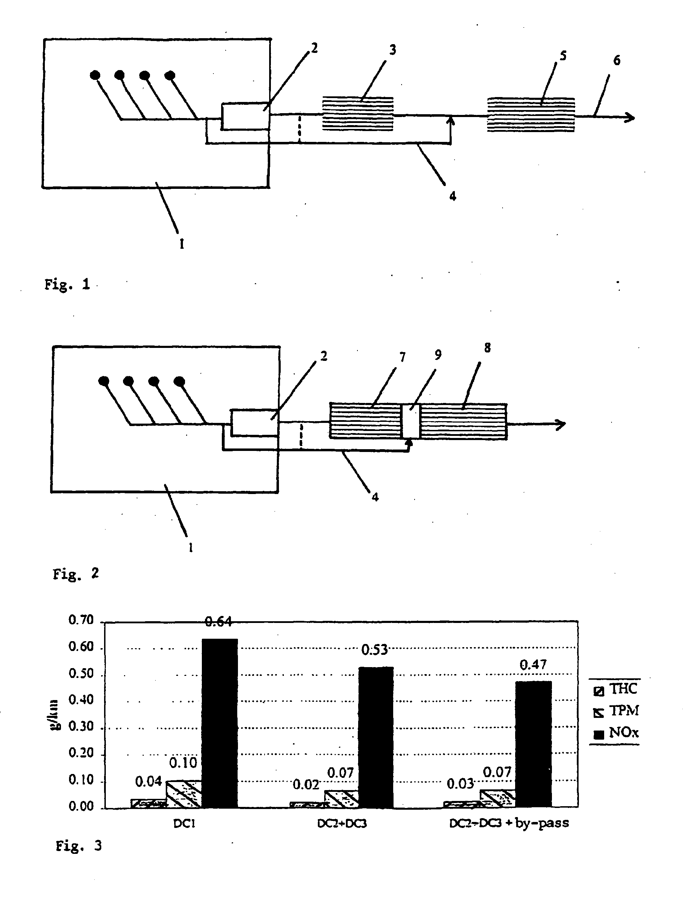

In Figure 1, a 4-cylinder diesel engine is indicated by reference numeral 1. This diesel engine comprises a turbine 2. The exhaust gases of the diesel engine are directed *via* the turbine to a first honeycomb catalyst 3, which is in a converter of its own, and from there further to a second honeycomb catalyst 5, which is also in a converter of its own. A portion of the exhaust gases is directed in a turbine bypass channel 4 past the first honeycomb catalyst 3 to the second honeycomb catalyst 5. By this system, the emissions of CO, HC, NOₓ and particles in the exiting exhaust gas 6 can be decreased effectively.

Figure 2 depicts another catalyst system for the purification of the exhaust gases of a diesel engine 1. The exhaust gases of the diesel engine 1 are directed *via* a turbine 2 to a first honeycomb catalyst 7 and from there further to a second honeycomb catalyst 8. The honeycombs 7 and 8 are in the same converter. A portion of the exhaust gases is directed in a bypass channel 4 past the first honeycomb catalyst 7 to the space 9 between the honeycombs 7 and 8.

The invention is further described below with the help of examples, which relate to engine tests performed.

The catalysts used in the examples are one- or two-catalyst converters, shown in Table 1.

**Table 1**

| **Catalytic converters used in the engine tests** | | | | |
|---|---|---|---|---|
| **Converter** | **Volume dm³** | **Cell density c/cm² (Cpsi)** | **Pt loading g/dm³** | **Blocks in the converter** |
| DC1 | 1.30 | 62(400) | 2.6 | 1 |
| DC2 | 0.63 | 46,5(300) | 2.6 | 1 |
| DC3 | 1.30 | 62(400) | 1.5 | 1 |
| DC4 | 1.30 | 62+124 (400+800) | 2.6 | 2 |
| DC5 | 1.30 | 62(400) | 2.6 | 1 (2-layer coating) |
| DC6 | 1.30 | 124(800) | 2.6 | 1 |
| DC7 | 0.83 | 155(1000) | 1.5 | 1 |
| DC8 | 1.30 | 62(400) | 0.7+3.5 Pd | 1 |

| | | | | |
|---|---|---|---|---|
| c/cm² = cells/cm² (Cpsi=cells/in²) | | | | |

The honeycombs of the catalysts were made from metal foils coated with a washcoat.

The washcoat used was an active support developed for Pt catalysts, having a specific surface area of over 200 m²/g when fresh. The amount of washcoat on the metal foil surface was approximately 45-50 g/m². Pt added to the said washcoat gave the catalysts at the same time a high activity for NOₓ reduction and for the formation of NO₂ from NO required for the oxidation of the soot. In converter DC4, there were used two blocks, the first of them having a cell density of 400 and the latter 124(800) c/cm² (cpsi). In DC5, a 2-layer washcoat was used in such a manner that Pt was in the lower coating and support containing Mn in the upper coating and DC7 had honeycombs having high cell densities (124(800) and 155(1000) c/cm² cpsi). The noble metal used in DC8 was the combination Pt-Pd, in which case the catalyst had a lower tendency to form NO₂ and to reduce NOₓ. Oxidation activity for hydrocarbons and CO was high, but, as the final emission, non-desirable NO₂ was formed only in the amount required for the combustion of soot.

### Example 1

Vehicle experiment MVEG-B was carried out using three different catalysts, DC1, DC2+DC3, and DC2+DC3+bypass. The test vehicle was a 2.0-litre TDI passenger car (Test Car 1). DC1 was in a CC position, the others in CC+UF positions. The bypass was carried out in accordance with Figure 1, in which case approximately 30 % of the flow bypassed the first catalyst. The emission results according to the MVEG-B cycle are shown in Table 2 and graphically in Figure 3.

**Table 2**

| **Converter** | **THC g/km** | **NOx g/km** | **TPM g/km** | **Note** |
|---|---|---|---|---|
| DC1 | 0.04 | 0.64 | 0.10 | Reference |
| DC2+DC3 | 0.02 | 0.53 | 0.07 | Reference |
| DC2+DC3+bypass | 0.03 | 0.47 | 0.07 | Reference |

The results show that the Euro 3 level was not reached with merely a Pt catalyst (DC1) in a CC position. By the use of a CC+UF combination it was possible to lower NOₓ emissions and in particular particle emissions (TPM). With the bypass of the first catalyst, NOₓ emissions were decreased in the CC+UF combination by approximately 11 % as compared with a CC+UF combination without bypass.

### Example 2

Emission measurements corresponding to Example 1 were carried out using different catalyst combinations and Test Car 2, in which the exhaust gas temperatures were clearly lower than in Test Car 1 used in Example 1. For this reason the conversions remained lower than in Example 1. No bypass was used in the experiments. Conversions (%) in the MVEG-B cycle with Test Car 2 are shown in Table 3.

**Table 3**

| **Test** | **Converter** | **THC** | **NOₓ** | **PM** | **Note** |
|---|---|---|---|---|---|
| 1 | DC2+DC1 | 50 | 9 | 17 | Reference |
| 2 | DC2+DC3 | 44 | 6 | 22 | Reference |
| 3 | DC4 | 54 | 9 | 12 | Reference |
| 4 | DC2+DC5 | 53 | 7 | 20 | Reference |
| 5 | DC2+DC6 | 60 | 7 | 22 | Reference |
| 6 | DC2+DC7 | 39 | 4 | 18 | Reference |
| 7 | DC8+DC1 | 60 | 2 | 17 | Reference |
| 8 | DC6+DC2 | 72 | 20 | 30 | Invention |

In Test 3 the converter was in a CC position, in the others in CC+UF positions.

A comparison of Test 1 with the others shows the effects of the different variables. The use of a lower loading in the second converter improved particle conversion. In Test 5, a cell number of 124(800) c/cm² (cpsi) was used in the second catalyst, whereby particle conversion improved from 17 % to 22 %. Particle conversion improved over Test 1 also when a 2-layer catalyst was used in the second catalyst (Test 4). In Test 8, the order of the Pt catalysts of Test 5 was reversed.

The results of Table 3 show that the best result is attained with the combination DC6+DC2 (Test 8). A highly effective catalyst can be accomplished by the use of the said combination. In order to optimise the concept and to decrease the pressure loss, it is also clearly possible to use as the first catalyst a smaller catalyst, which, however, has a higher cell density than the second catalyst.

## Claims

1. A system for the purification of diesel engine exhaust gases, which system is maintenance-free and comprises a first honeycomb catalyst (3; 7) and a second honeycomb catalyst (5; 8) fitted downstream of the first catalyst in the flow direction of the exhaust gases, each of the honeycombs (3, 5; 7, 8) has a catalytic material active for the selective reduction of nitrogen oxides, for the formation of NO₂, and for the oxidation of hydrocarbons, carbon monoxide and hydrogen, and that at least one of the honeycombs contains a compound, which binds soot, **characterized in that** the cell density of the first honeycomb catalyst (3; 7) is higher than the cell density of the second honeycomb catalyst (5; 8) by means of which the combustion of soot and the reduction of nitrogen oxides are further improved.

2. A system according to Claim 1 wherein the cell density of the first honeycomb catalyst (3; 7) is 62(400) or higher than 62(400) cells per square cm (c/cm²) (cells per square inch (cpsi)) and that the cell density of the second honeycomb catalyst (5; 8) is 62(400) or lower than 62(400) c/cm² (cpsi).

3. A system according to claims 1 or 2 wherein the said compound binding soot is located as a separate layer alone or together with a binding agent on the surface of a layer of the active catalytic material.

4. A system according to any of the above claims wherein the said compound binding soot contains Mn, Ce, Fe, V, La, Zr, Cr, an alkali metal, Cu, Ba, Sr and/or Rh.

5. A system according to any of the above claims wherein the said compound binding soot is present together with alumina, titania, silica, zeolite, or a combination thereof.

6. A system according to any of the above claims wherein the honeycombs comprise a washcoat which has a large surface area and on which the said active catalyst material is supported.

7. A system according to Claim 6 wherein the washcoat contains alumina, titania, silica and/or zeolite.

8. A system according to any of the above claims wherein the active catalyst material is a noble metal, such as platinum, palladium, rhodium, or a mixture thereof.

9. A method for the purification of diesel engine exhaust gases, **characterized in that** the exhaust gases are directed through a first honeycomb catalyst and thereafter through a second honeycomb catalyst, in both of which honeycombs the nitrogen oxides present in the exhaust gases are reduced selectively, NO₂ is formed, and hydrocarbons, carbon monoxide and hydrogen are oxidised, at least one of the honeycombs containing a compound which binds soot, and that the cell densities of the honeycombs are selected in such a manner that the cell density of the first honeycomb catalyst is higher than the cell density of the second honeycomb catalyst, in which case the combustion of soot and the reduction of nitrogen oxides take place with a high degree of conversion.

## Patentansprüche

1. System zur Reinigung des Abgases eines Dieselmotors, wobei das System wartungsfrei ist und einen ersten Wabenkörper-Katalysator (3; 7) und einen zweiten Wabenkörper-Katalysator (5; 8) umfasst, welcher stromabwärts des ersten Katalysators in der Flussrichtung des Abgases eingebaut ist, wobei jeder der Wabenkörper (3, 5; 7, 8) ein katalytisches Material aufweist, welches für die selektive Reduktion von Stickstoffoxiden, für die Bildung von NO₂ und für die Oxidation der Kohlenwasserstoffe, Kohlenstoffmonoxid und Wasserstoff wirksam ist, und wobei wenigstens einer der Wabenkörper eine Verbindung enthält, welche Ruß bindet, **dadurch gekennzeichnet, dass** die Zelldichte des ersten Wabenkörper-Katalysators (3; 7) höher ist als die Zelldichte des zweiten Wabenkörper-Katalysators (5; 8), wodurch die Verbrennung von Ruß und die Reduktion von Stickstoffoxiden weiter verbessert wird.

2. System nach Anspruch 1, wobei die Zelldichte des ersten Wabenkörper-Katalysators (3; 7) 62(400) oder mehr als 62(400) Zellen je Quadratzentimeter (c/cm²) (cells per square inch (cpsi)) beträgt, und dass die Zelldichte des zweiten Wabenkörper-Katalysators (5; 8) 62(400) oder weniger als 62(400) c/cm² (cpsi) beträgt.

3. System nach Anspruch 1 oder 2, wobei die Verbindung, welche Ruß bindet, als eine separate Schicht allein oder zusammen mit einem Bindemittel auf der Oberfläche einer Schicht des aktiven katalytischen Materials angeordnet ist.

4. System nach einem der obigen Ansprüche, wobei die Verbindung, welche Ruß bindet, Mn, Ce, Fe, V, La, Zr, Cr, ein Alkalimetall, Cu, Ba, Sr und/oder Rh, enthält.

5. System nach einem der obigen Ansprüche, wobei die Verbindung, welche Ruß bindet, zusammen mit Aluminiumoxid, Titandioxid, Siliziumdioxid, Zeolith oder einer Kombination dieser vorhanden ist.

6. System nach einem der obigen Ansprüche, wobei die Wabenkörper einen "Washcoat" umfasst, der eine große Oberfläche aufweist und von welcher das aktive katalytische Material getragen wird.

7. System nach Anspruch 6, wobei der Washcoat Aluminiumoxid, Titandioxid, Siliziumdioxid und/oder Zeolith umfasst.

8. System nach einem der obigen Ansprüche, wobei das aktive Katalysatormaterial ein Edelmetall ist, wie Platin, Palladium, Rhodium oder eine Mischung dieser.

9. Verfahren zur Reinigung des Abgases eines Dieselmotors, **dadurch gekennzeichnet, dass** die Abgase durch einen ersten Wabenkörper-Katalysator gerichtet werden und anschließend durch einen zweiten Wabenkörper-Katalysator, wobei in beiden Wabenkörpern die Stickstoffoxide, welche in den Abgasen vorhanden sind, selektiv reduziert werden, NO₂ gebildet wird und Kohlenwasserstoffe, Kohlenstoffmonoxid und Wasserstoff oxidiert wird, wobei wenigstens einer der Wabenkörper eine Verbindung enthält, welche Ruß bindet, und wobei die Zelldichten der Wabenkörper auf solch eine Weise ausgewählt sind, dass die Zelldichte des ersten Wabenkörper-Katalysators höher ist als die Zelldichte des zweiten Wabenkörper-Katalysators, wodurch die Verbrennung von Ruß und die Reduktion von Stickstoffoxiden mit einem höheren Umwandlungsgrad stattfindet.

## Revendications

1. Système de purification des gaz d'échappement d'un moteur diesel, ledit système ne nécessitant aucune maintenance et comprenant un premier catalyseur à nids d'abeilles (3; 7) et un second catalyseur à nids d'abeilles (5; 8), installé en aval du premier catalyseur dans le sens du flux des gaz d'échappement, chacun des nids d'abeilles (3, 5; 7, 8) ayant une matière catalytique active pour la réduction sélective des oxydes d'azote, pour la formation de NO₂, et pour l'oxydation des hydrocarbures, du monoxyde de carbone et de l'hydrogène, et au moins un des nids d'abeilles contient un composé, qui lie les oxydes de suie, **caractérisé par le fait que** la densité cellulaire du premier catalyseur à nids d'abeilles (3; 7) est supérieure à la densité cellulaire du second catalyseur à nids d'abeilles (5; 8), ce qui permet d'améliorer encore la combustion de la suie et la réduction des oxydes d'azote.

2. Système selon la revendication 1, dans lequel la densité cellulaire du premier catalyseur à nids d'abeilles (3; 7) est de 62(400) ou supérieure à 62(400) cellules par cm carré (c/cm²) (cellules par pouce carré (cpsi) et dans lequel la densité cellulaire du second catalyseur à nids d'abeilles (5; 8) est de 62(400) ou inférieure à 62(400) c/cm² (cpsi).

3. Système selon la revendication 1 ou 2, dans lequel ledit composé liant les oxydes de suie est placé dans une couche distincte seul ou avec un liant sur la surface de la couche de matière catalytique active.

4. Système selon l'une quelconque des revendications ci-dessus, dans lequel ledit composé liant les oxydes de suie contient du Mn, Ce, Fe, V, La, Zr, Cr, un métal alcalin, Cu, Ba, Sr et/ou Rh.

5. Système selon l'une quelconque des revendications précédentes, dans lequel ledit composé liant les oxydes de suie est présent en même temps que de l'alumine, du titane, de la silice, de la zéolite, ou une combinaison de ceux-ci.

6. Système selon l'une quelconque des revendications précédentes, dans lequel les nids d'abeilles comprennent un encollage présentant une large surface supportant ladite matière catalytique.

7. Système selon la revendication 6, dans lequel l'encollage comprend de l'alumine, du titane, de la silice et/ou de la zéolite.

8. Système selon l'une quelconque des revendications ci-dessus, dans lequel la matière catalytique active est un métal noble, comme le platine, le palladium, le rhodium ou un mélange de ceux-ci.

9. Procédé de purification des gaz d'échappement d'un moteur diesel, **caractérisé par le fait que** les gaz d'échappement sont dirigés, en passant par un premier catalyseur à nids d'abeilles puis ensuite par un second catalyseur à nids d'abeilles, dans lesquels les oxydes d'azote présents dans les gaz d'échappement sont réduits de façon sélective, du NO₂ est formé, et les hydrocarbures, le monoxyde de carbone et l'hydrogène sont oxydés, au moins un des nids d'abeilles contenant un composé liant les oxydes de suie, et **caractérisé par le fait que** les densités cellulaires des nids d'abeilles sont sélectionnées de telle façon que la densité cellulaire du premier catalyseur à nids d'abeilles soit supérieure à la densité cellulaire du second catalyseur à nids d'abeilles, auquel cas la combustion de la suie et la réduction des oxydes d'azote sont réalisées avec un degré de conversion important.
